# EUROPEAN PATENT SPECIFICATION

(11) **EP 2 379 423 B1**
(45) Date of publication and mention of the grant of the patent: **06.11.2013**
(21) Application number: 10732223.2
(22) Date of filing: 19.01.2010
(51) Int. Cl.: B65D 77/20, B65D 21/08, B65D 79/00

(54) **PACKAGE ASSEMBLY**
VERPACKUNGSBAUGRUPPE
ENSEMBLE D'EMBALLAGE

(30) Priority: 19.01.2009 US 145677 P
(43) Date of publication of application: 26.10.2011
(73) Proprietor: ConAgra Foods RDM, Inc., Omaha, NE 68102 (US)
(72) Inventor: MALONE, Yolanda, A., Ridgefield, Connecticut 06877 (US); GREENWOOD, Donald, L., Bradenton, FL 34202 (US); FRANCE, David, W., Omaha, NE 68164 (US); WONG, Alison, San Francisco, CA 94025 (US); PIAZZA, Anthony, Palo Alto, CA 94301 (US); PIERIK, Anke, El Granada, CA 94018 (US); LEFORS, Jon, San Francisco, CA 94115 (US); DEAKIN, Lynda, A., Okland, CA 94602 (US); SHIMEK, Lauren, San Ramon, CA 94583 (US); TOYOFUKU, Eric, Huntington Beach, CA 92648 (US); CORIANO III, Alexander, Brisbane, CA 94005 (US); HWANG, Grace, Menlo Park, CA 94025 (US); LASSERON, Emilie, San Francisco, CA 94107 (US); GIBBS HOWARD, Suzanne, San Francisco, CA 94110 (US)
(74) Representative: Hamer, Christopher K.
(86) International application number: PCT/US2010/021410
(87) International publication number: WO 2010/083523

(56) References cited:
- JP-A- 9 286 437
- US-A- 3 451 587
- US-A- 3 969 535
- US-A- 5 690 853
- US-A- 5 786 010
- US-A- 5 834 046
- US-A1- 2007 237 863
- US-B2- 7 456 376

## Description

### BACKGROUND

The development of microwave cooking has had an enormous impact on food preparation. The high speed with which cooking occurs and the broad array of materials suitable for use in microwave ovens has created an ever increasing demand for economical, simple, disposable containers, which, when used in a microwave oven, duplicate as closely as possible the cooking results of a conventional oven. The introduction of relatively low cost and reliable microwave interactive materials (sometimes referred to as susceptor materials) has made microwave cooking even more attractive for those food items which require crisping or browning with cooking.

Many disposable containers that are suitable for use in a microwave oven to cook a food product are configured to also be useable as a serving container when the food product is consumed. Consequently, such disposable containers typically have a construction that does not change in form during the life cycle of the product (e.g., during storage, cooking/heating and consumption of the food product, and disposal). Other disposable containers, such as microwave popcorn bags, are configured to be compact for storage, and to expand as the food product contained therein is cooked. However, such containers normally require the use of a separate container such as a bowl, plate, or the like for consumption of the food product.

JP-9-286437 discloses a sterile cooking container (1) for heating boiled rice (7) having a storage and an eating configuration. During storage, the boiled rice is retained within a storage part (11) such that it substantially fills the space available, which is stated as a positive advantage when heating the rice. The container comprises folded sidewalls (3) which may be moved upwards. In use the rice is heated and after heating, a film (8) covering the container is removed. After removal of the film, the folded sidewalls are physically moved upwards so as to provide additional space for an additional ingredient (8) such as curry. In this way overflow of additional ingredients may be prevented without reducing heating efficiency.

### SUMMARY

An aspect of the present disclosure relates to a package assembly. The package assembly includes a container that is configured for expansion in a generally vertical direction between a collapsed state and an extended state during cooking or heating. The container includes a sidewall having a first axial end portion and an oppositely disposed second axial end portion. The sidewall is vertically compressed in the collapsed state and configured for expansion in a generally vertical direction to the extended state. A base portion is engaged with the first axial end portion of the sidewall. The base portion includes a base. The base portion and the sidewall cooperatively define an interior region, comprising a food product disposed therein, having an opening. A cover is engaged with the second axial end portion of the sidewall. The cover is configured for covering the opening to the interior region during cooking or heating. The cover may then be removed so that the package assembly can be used as a serving container.

Another aspect of the present disclosure relates a microwavable package assembly having a container that is configured for expansion in a generally vertical direction between a collapsed state and an extended state during cooking or heating. The container includes a sidewall, a base portion, a top portion and a cover. The sidewall includes a first axial end portion and an oppositely disposed second axial end portion. The sidewall is vertically compressed in the collapsed state and configured to expand in a generally vertical direction to the extended state. The base portion is engaged with the first axial end portion of the sidewall. The base portion includes a base having a microwave susceptor. The top portion is engaged with the second axial end portion of the sidewall. The top portion defines an opening through an interior cavity, which is defined by the sidewall, the base portion and the top portion, is accessible. The opening is disposed adjacent to the base in the collapsed state and is axially displaced from the base along a longitudinal axis of the container during expansion of the container. The cover is engaged to the top portion of the container for covering the opening. The package assembly further includes a food product, such as a popcorn charge, disposed in the interior region of the container.

Also disclosed herein is a microwavable package assembly. The microwavable package assembly includes a container having a base portion and a sidewall. The base portion includes a microwave susceptor. The sidewall is engaged to the base portion. The sidewall and the base portion define an interior region. At least a portion of the sidewall is transparent. The microwavable package assembly further includes a food product disposed in the interior region of the container.

A variety of additional aspects will be set forth in the description that follows. These aspects can relate to individual features and to combinations of features. It is to be understood that both the foregoing general description and the following detailed description are example and explanatory only and are not restrictive of the broad concepts upon which the embodiments disclosed herein are based, and which are defined by the appended claims.

### DRAWINGS

FIGS. 1 and 2 are perspective views of a package assembly in an extended state having example features of aspects in accordance with the principles of the present disclosure.
FIG. 3 is a perspective view of the package assembly of FIG. 1, wherein the package assembly is configured as a tub.
FIGS. 4 and 5 are perspective views of a package assembly in an extended state having example features of aspects in accordance with the principles of the present disclosure, wherein the package assembly is configured as a cup.
FIG. 6 is a perspective view of a package assembly in an extended state having example features of aspects in accordance with the principles of the present disclosure, wherein the package assembly is generally oval in cross-section.
FIG. 7 is a perspective view of a package assembly in an extended state having example features of aspects in accordance with the principles of the present disclosure, wherein the package assembly is generally rectangular (e.g., square) in cross-section.
FIG. 8 is a cross-sectional view of the package assembly of FIG. 1.
FIG. 9 is a cross-sectional view of the package assembly of FIG. 5.
FIG. 10 is a fragmentary cross-sectional view of another example of a base portion suitable for use with the package assembly of FIG. 1.
FIG. 11 is a fragmentary cross-sectional view of an example of a base portion suitable for use with the package assembly of FIG. 1.
FIG. 12 is a cross-sectional view of another example of a top portion suitable for use with the package assembly of FIG. 1.
FIG. 13 is a perspective view of a package assembly in an extended state having example features of aspects in accordance with the principles of the present disclosure, wherein the package assembly includes handles configured to facilitate manipulation of the package assembly.
FIG. 14 is a top view of a cover assembly suitable for use with the package assembly of FIG. 1.
FIG. 15 is a top view of a film suitable for use with the cover assembly of FIG. 14.
FIG. 16 is a perspective view of another example of the cover.
FIG. 17 is a top view of the cover of FIG. 16.
FIG. 18 is a perspective view of the package assembly of FIG. 1 in a collapsed state.
FIG. 19 is a cross-sectional view of the package assembly of FIG. 1 in the collapsed state.
FIG. 20 is a perspective view of a sidewall of the package assembly of FIG. 1 being compressed into another example of the collapsed state.
FIG. 21 is a schematic representation of a cross-sectional view of the package assembly in the collapsed state.
FIG. 22 is a perspective view of the package assembly in the collapsed state having a release strip.
FIG. 23 is a perspective view of an example of the package assembly.
FIG. 24 is a representation of an example procedure for expanding the package assembly of FIG. 19 to the extended state.
FIG. 25 is a representation of another example procedure for expanding the package assembly of FIG. 22 to the extended state.
FIG. 26 is a representation of another example procedure for expanding the package assembly of FIG. 23 to the extended state.
FIG. 27 is a representation of another example procedure for expanding the package assembly to the extended state.

### DETAILED DESCRIPTION

Reference will now be made in detail to the example aspects of the present disclosure that are illustrated in the accompanying drawings. Wherever possible, the same reference numbers will be used throughout the drawings to refer to the same or like structure.

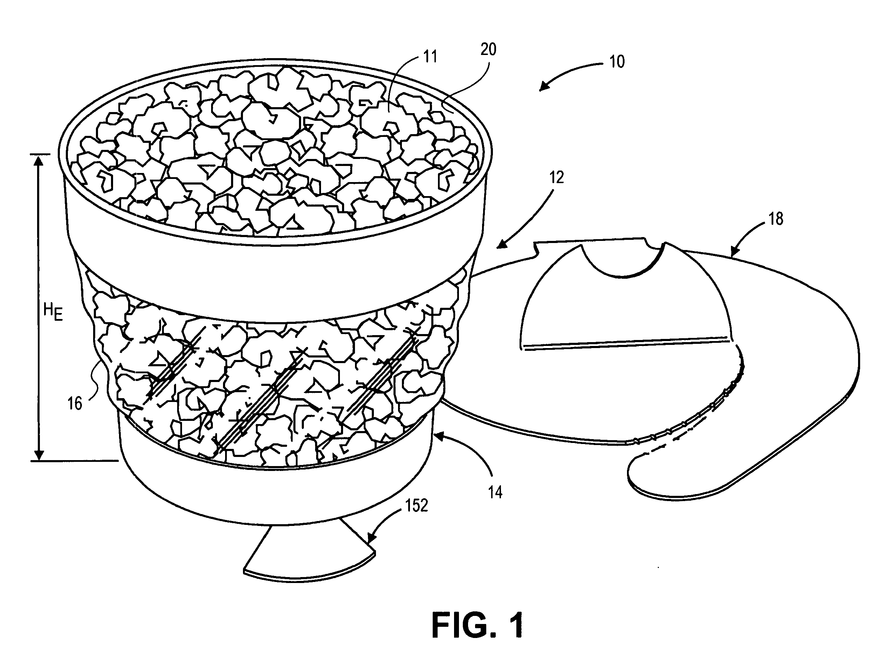

Referring now to FIGS. 1 through 23, a microwavable package assembly, generally designated 10, is shown. In one aspect of the present disclosure, the package assembly 10 is configured for containing the food product 11 during storage, cooking/heating and serving.

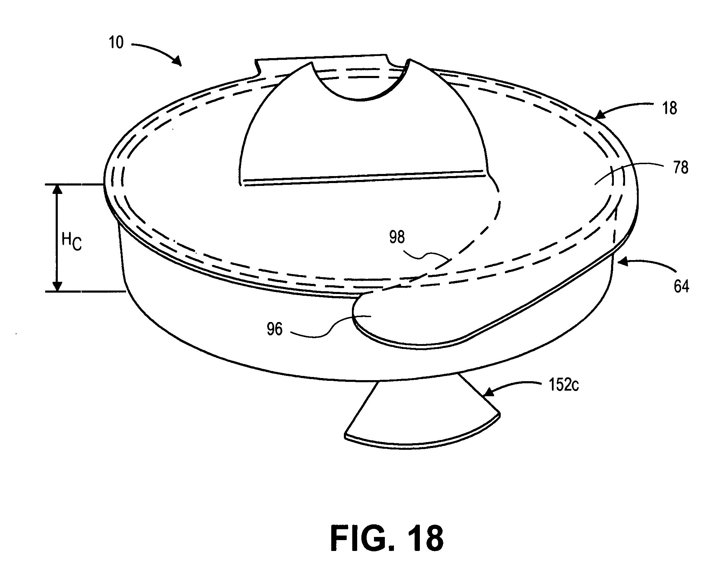

In one aspect of the present disclosure, the package assembly 10 is configured to provide an extended state (see, e.g., FIG. 1) and a collapsed state (see, e.g., FIG. 18). In the extended state, the package assembly 10 can act as a serving container from which the cooked/heated food product 11 can be eaten. In the extended state, the package assembly 10 has an extended height HE.

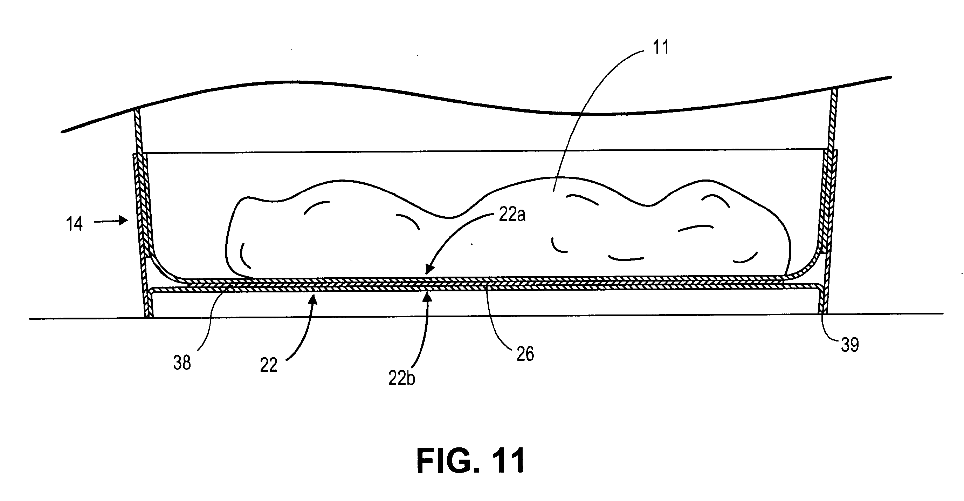

In the collapsed state, the package assembly 10 is configured for storage. In the collapsed state, the package assembly 10 has a collapsed height H_{c} (shown in FIG. 11) that is less than the extended height H_{E}. This reduced height is potentially advantageous as it provides a compact package assembly 10 that takes up less storage space than conventional microwave cooking containers.

In one aspect of the present disclosure, the collapsed height H_{c} is less than or equal to about 50% of the extended height H_{E}. In another aspect, the collapsed height H_{c} is less than or equal to about 15% of the extended height H_{E}. In another aspect, the collapsed height H_{c} is less than or equal to about 10% of the extended height H_{E}.

The microwavable package assembly 10 may be used to cook/heat a variety of food products. For instance, as shown in FIG. 1, the food product 11 may be one that expands when heated (e.g., the volume occupled by the food product 11 increases). Example food products 11 that expand when heated include, but are not limited to: popcorn kernels, dough products, cereal products, combinations thereof, and so forth. In such examples, the expansion of the food product 11 and any steam emitted by the food product 11 during heating causes the package assembly 10 to expand from the collapsed height H_{c} to an extended height HE.

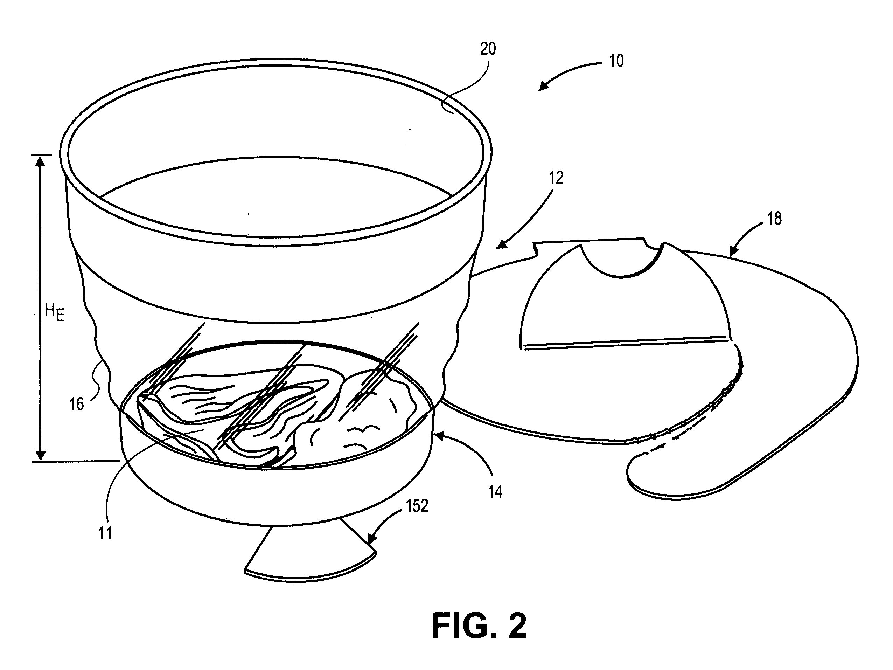

As shown in FIG. 2, the food product 11 may also be one that does not expand substantially when heated (e.g., the volume occupied by the food product 11 does not appreciably increase, remains constant, or decreases). For example, the package assembly 10 may include a food product 11 which does not expand substantially, but which emits steam when heated. In such examples, the steam emitted by the food product 11 causes the package assembly 10 to expand from the collapsed height H_{c} to an extended height H_{E}. Example food products 11 which do not expand substantially, but which emit steam when heated include, but are not limited to: meats, poultry, fish, sauces, vegetables, fruits, pastas, rice, combinations thereof, and so forth.

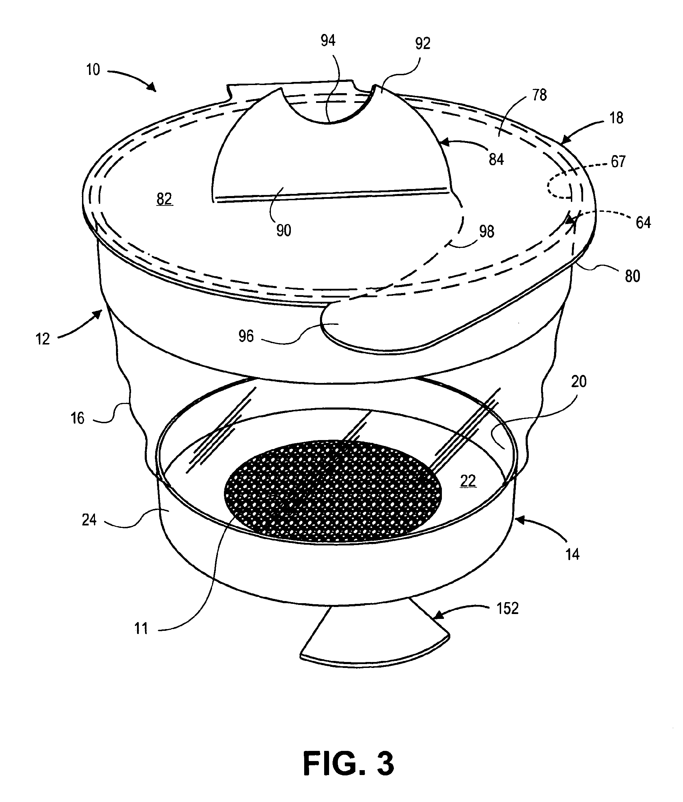

While the package assembly 10 may be used to cook various food products 11 that may or may not expand when cooked or heated, the food product 11 is shown herein in FIGS. 3 through 23 as being a popcorn charge that includes unpopped popcorn kernels and an oil/fat component or popped popcorn for convenience of illustration.

Certain food products 11 undergo a change in appearance during cooking/heating. For example, popcorn kernels burst open and puff out when subjected to heat. In one aspect of the present disclosure, the package assembly 10 is configured such that a portion of the package assembly 10 is transparent so that transformations in the food product 11 can be viewed by the consumer while the food product 11 is being cooked/heated. As used herein, the term "transparent" indicates that contents of the package assembly 10 (e.g., the food product 11) may be visible through those portions of the package assembly 10 that are transparent. Thus, portions of the package assembly 10 may be understood to be "transparent" if those portions are completely transparent, translucent, transparent or translucent with opaque regions, transparent or translucent with printed indicia, tinted, and so on.

Transformations undergone by the food product 11 when cooked/heated using the package assembly 10 may be viewed to determine when the food product 11 is properly (e.g., fully) cooked. For instance, when popping popcorn in a microwave oven, it is desirable to determine when a sufficient amount of popcorn kernels within the popcorn charge have popped so that the popped popcorn may be removed from the microwave oven to prevent burning of the popped popcorn. This determination has until now been based primarily on the sound produced by the popping popcorn. For example, the application of microwave energy to the popcorn may be removed (e.g., the popcorn may be removed from the microwave oven or the microwave oven turned off) when the consumer determines, based on the sound produced by the popping popcorn, that popping of the kernels has slowed to a predetermined frequency. However, it has been found that, in practice, consumers often ignore the sound produced during popping and instead simply heat the popcorn in the microwave oven for a predetermined duration of time, leaving the popping popcorn unattended.

In one aspect of the present disclosure, the transparent portion of the package assembly 10 may allow the popping/popped popcorn to be viewed to aid in determining when a sufficient amount of the popcorn kernels are popped. For instance, the popping/popped popcorn may be viewed through the transparent portions of the package assembly 10 to determine when the package assembly 10 is sufficiently filled with popped popcorn. In some instances, the sound produced by the popping popcorn may continue to be relied upon in addition to viewing of the popcorn to ascertain when the popcorn kernels have sufficiently popped. Moreover, by furnishing the consumer with the ability to view the popcorn as it pops, the package assembly 10 creates interest in the popping operation. Thus, the consumer is provided with an inducement to remain present while the popcorn pops, instead of merely allowing the popcorn to pop in the microwave oven for a predetermined duration of time. The consumer may then actively determine when a sufficient amount of popcorn is popped, reducing the likelihood that the popcorn could be overcooked.

In one aspect of the present disclosure, the food product 11 may comprise a popcorn charge containing popcorn kernels having coatings that furnish colorant and/or flavorant to the kernels and/or popped popcorn. In this manner, the kernels may be colored with one or more colors when viewed through the transparent portions of the package assembly 10. In implementations, the coating can be a gum or starch coating applied to the kernels. A variety of colors may be provided. In some implementations, coatings having a single color (e.g., red, blue, green, turquoise, etc.) may be applied to all kernels within the popcorn charge. In other implementations, coatings applied to kernels within the popcorn charge may provide a combination of two or more different colors to the kernels (e.g., red/green, blue/gold, red/blue, multiple colors, etc.). Additionally, the coatings may remain attached to the husks of the popped popcorn to furnish additional color to the popped popcorn when viewed through the transparent portions of the package assembly 10. For example, the popped popcorn may have white puff with red husks, yellow puff with blue and gold husks, white puff with red and blue husks, white puff with red and green husks, and so forth. A variety of color combinations are possible.

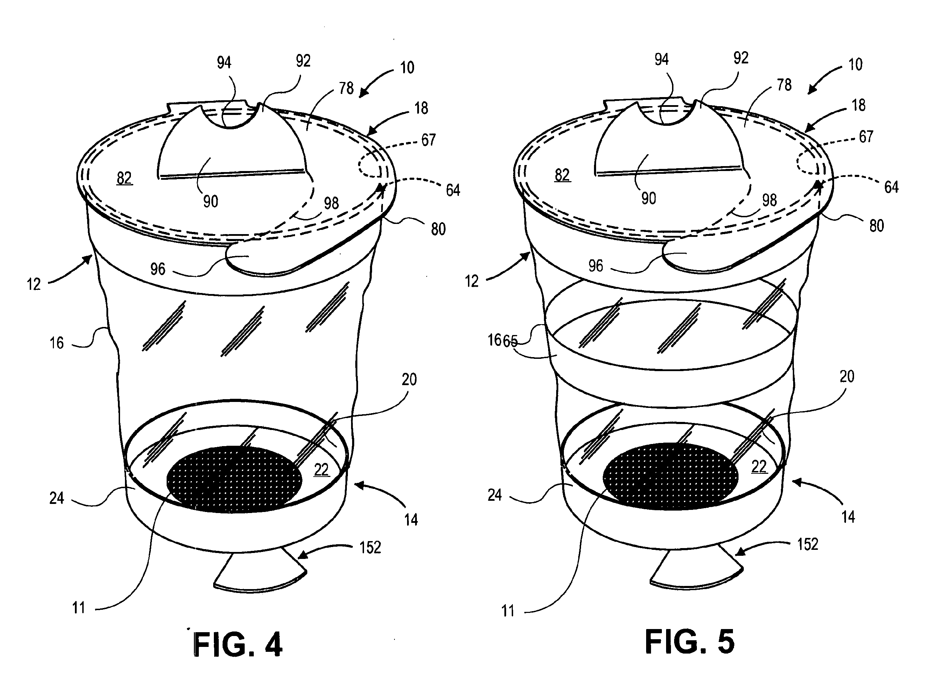

In one aspect of the present disclosure, the package assembly 10 is configured such that it is generally frusto-conical in shape. In various implementations, the package assembly 10 may be configured as a tub (as shown in FIGS. 1, 2, and 3) to hold a large serving or multiple servings of the food product 11, or as a cup (as shown in FIGS. 4 and 5) to provide a smaller serving of the food product 11, such as a serving for a single person. Thus, for example, the package assembly 10 may be configured to provide a tub of popped popcorn suitable for consumption by two or more persons or a cup of popped popcorn sized for consumption by a single person.

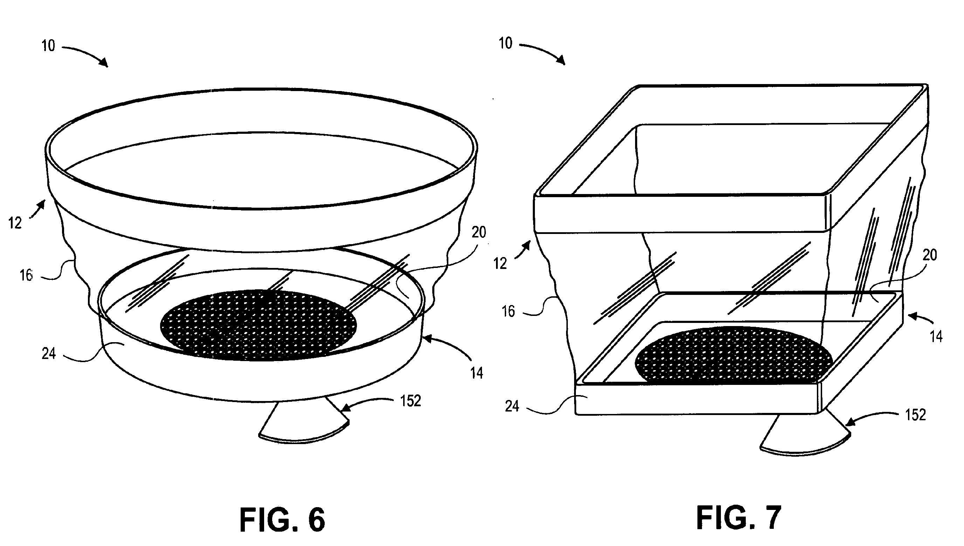

In another aspect of the disclosure, the package assembly 10 can be configured to be cylindrical instead of frusto-conical. Further, the package assembly 10 can be configured such that it has another geometric cross-section (e.g., an oval cross-section, a square cross-section, a rectangular cross-section, a hexagonal cross-section, etc.). For instance, FIG. 6 illustrates an example package assembly 10 having a generally oval cross-section, while FIG. 7 illustrates a package assembly 10 having a generally square cross-section. Other cross-sectional shapes are contemplated.

Referring now to FIGS. 1 through 9, the package assembly 10 includes a container 12 having a base portion, generally designated 14, a sidewall 16, and a cover assembly 18 (shown removed in FIG. 1). The base portion 14 and the sidewall 16 cooperatively define an interior cavity 20 in which the food product 11 is disposed.

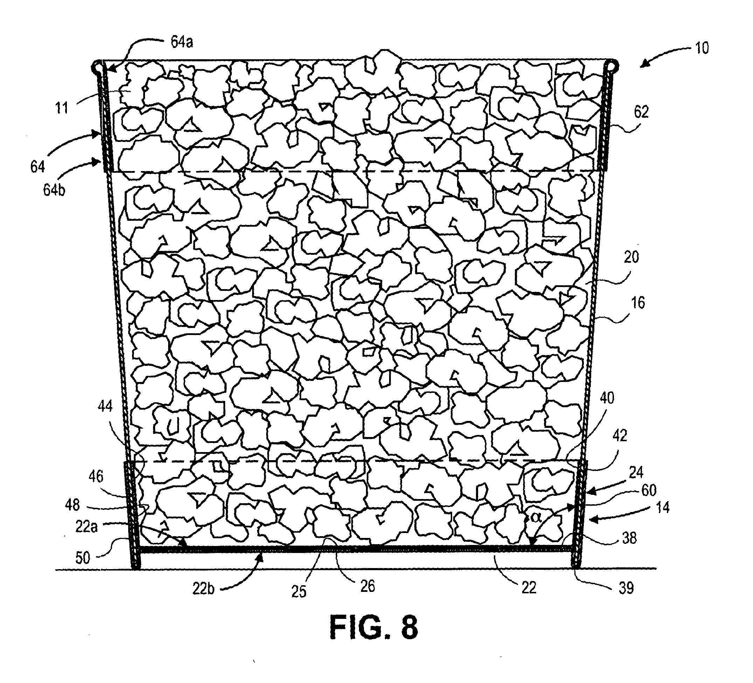

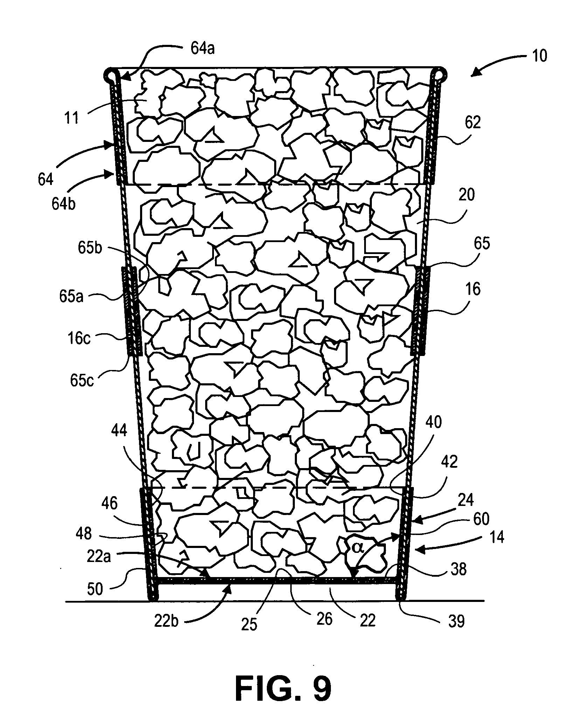

The base portion 14 of the package assembly 10 includes a base 22, which is configured to support the food product 11 in the interior cavity 20 of the package assembly 10, and a wall 24 that surrounds the base 22. The base 22 is generally horizontally disposed in the package assembly 10 while the wall 24 extends outwardly from the base 22 at an inside angle α (shown in FIGS. 8 and 9) relative to the base 22.

In the depicted example of FIGS. 8 and 9, the base 22 includes multiple layers. In the depicted examples, the base 22 includes an inner layer 22a and an outer layer 22b. The inner layer 22a of the base 22 includes a first surface 25 configured for contact with the food product 11 in the interior cavity 20 of the package assembly 10 and a second surface 26, at least a portion of which is configured for contact with at least a portion of the outer layer 22b.

The inner layer 22a of the base 22 is made of a first material while the outer layer 22b is made of a second material. In one aspect of the present disclosure, the first and second materials are heat tolerant materials that are transparent to microwave energy. In one aspect of the present disclosure, the first and second materials are the same. In another aspect, the first and second materials are different. In one example, the first material of the inner layer 22a can be a grease proof paper. An example of a grease proof paper suitable for use as the inner layer 22a is a 23 lb/ream paper that has been treated/coated with a fluorochemical material to enhance grease resistance. A conventional fluorochemical suitable for use as the fluorochemical material is sold under the brand name CIBA LODYNE® or DUPONT ZONYL®. In another example, the first and second materials of the inner and outer layers 22a, 22b can be paper, paperboard, fiberboard, cardboard, plastics such as polyester, ethylene vinyl alcohol, polyamides (e.g., nylon), polypropylene, recycled polyethylene terephthalate (rPET), crystallized polyethylene terephthalate (CPET) such as carbon-loaded CPET, combinations thereof, and so on.

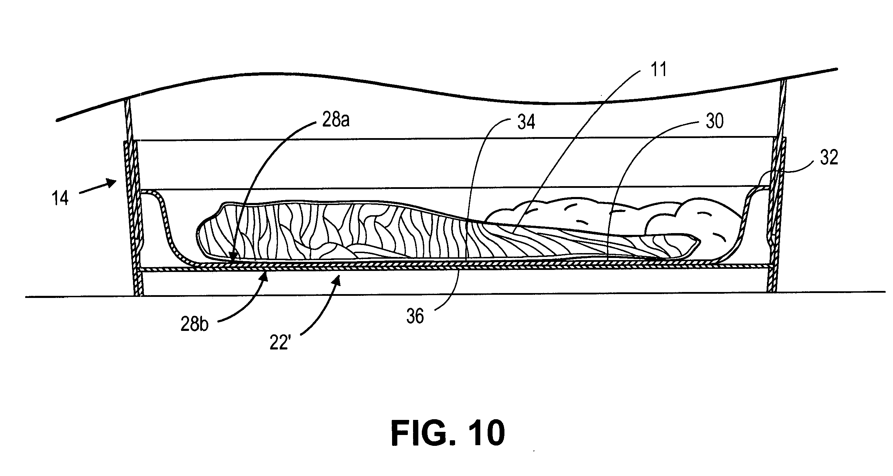

Referring now to FIG. 10, another example of a base 22' is shown. In FIG. 4, the base 22' includes an interior layer 28a and an exterior layer 28b. The interior layer 28a of the base 22' is bowl shaped. In the example of FIG. 10, the interior layer 28a of the base 22' includes a recessed portion 30 that is surrounded by a rim portion 32. A first surface 34 of the recessed portion 30 is configured for contact with the food product 11 in the interior cavity 20 of the package assembly 10. At least a portion of a second surface 36 of the recessed portion 30 is configured for contact with at least a portion of the exterior layer 28b.

The interior layer 28a of the base 22' is made of a first material while the exterior layer 28b is made of a second material. In one aspect of the present disclosure, the first and second materials are heat tolerant materials that are transparent to microwave energy. In one aspect of the present disclosure, the first and second materials are the same. In another aspect, the first and second materials are different. In one example, the first material of the interior layer 28a can be a grease proof paper. An example of a grease proof paper suitable for use as the inner layer 28a is a 23 lb/ream paper that has been treated/coated with a fluorochemical material to enhance grease resistance. A conventional fluorochemical suitable for use as the fluorochemical material is sold under the brand name CIBA LODYNE® or DUPONT ZONYL®. In another example, the first and second materials of the inner and outer layers 28a, 28b can be paper, paperboard, fiberboard, cardboard, plastics such as polyester, ethylene vinyl alcohol, polyamides (e.g., nylon), polypropylene, recycled polyethylene terephthalate (rPET), crystallized polyethylene terephthalate (CPET) such as carbon-loaded CPET, combinations thereof, and so on.

Referring now to FIGS. 8, 9, and 11, the base 22 includes a microwave susceptor 38 that is made of a microwave susceptor material. In the present disclosure, the term "microwave susceptor material" is meant to refer to a material which absorbs energy and becomes hot, upon exposure to microwave energy in a microwave oven. The microwave susceptor material then dissipates heat to the food product 11 disposed in the interior region 20 of the container 12. Microwave susceptor materials suitable for use with the package assembly 10 include microwave interactive materials including but not limited to a metalized (such as aluminized) polyester film.

In one aspect of the present disclosure, the inner layer 22a is the microwave susceptor 38 (shown in FIGS. 8 and 9). In another aspect, the microwave susceptor 38 is disposed between the inner layer 22a and the outer layer 22b such that the microwave susceptor 38 is in contact with at least a portion of the second surface 26 of the inner layer 22a and at least a portion of the outer layer 22b (shown in FIG. 11).

The wall 24 of the base portion 14 is configured such that it surrounds the base 22. The wall 24 includes an axial end 39 that is configured to rest on a generally horizontal surface such as a shelf, a microwave oven surface, a table, and so on during storing, cooking/heating, and/or serving. The wall 24 is engaged with the base 22 such that when the axial end 39 is disposed on the generally horizontal surface, the base 22 is generally horizontal.

In the depicted example of FIGS. 8 and 9, the wall 24 of the base portion 14 includes multiple layers. In FIGS. 8 and 9, the wall 24 includes an inner ply 40 of a third material and an outer ply 42 of a fourth material with the inner ply 40 being the innermost surface of the wall 24. In one aspect of the present disclosure, the third and fourth materials are heat tolerant materials that are transparent to microwave energy. In one aspect of the present disclosure, the third and fourth materials are the same. In another aspect, the third and fourth materials are different. In one example, the third material of the inner ply 40 can be a grease proof paper. In another example, the third and fourth materials of the inner and outer plies 40,42 can be paper, paperboard, fiberboard, cardboard, plastics such as polyester, ethylene vinyl alcohol, polyamides (e.g., nylon), polypropylene, recycled polyethylene terephthalate (rPET), crystallized polyethylene terephthalate (CPET) such as carbon-loaded CPET, combinations thereof, and so on.

The inner ply 40 is a strip that includes a first surface 44 and an oppositely disposed second surface 46. The first surface 44 of the inner ply 40 faces toward the interior cavity 20.

The outer ply 42 is a strip that includes a first surface 48 and an oppositely disposed second surface 50. The first surface 48 of the outer ply 42 faces toward the second surface 46 of the inner ply 40. The second surface 50 of the outer ply 42 is the outermost surface of the wall 24 of the base portion 14.

The inner ply 40 of the wall 24 of the base portion 14 is formed by an end of the inner ply 40 being engaged at a seam to an opposite end of the inner ply 40 such that the inner ply 40 surrounds the base 22. The outer ply 42 of the wall of the base portion 14 is formed by an end of the outer ply 42 being engaged at an outer seam to an opposite end of the outer ply 42.

The inner ply 40 is configured such that it surrounds the base 22 with the first surface 44 of the inner ply 40 engaged to the base 22. In one aspect of the present disclosure, the first surface 44 of the inner ply 40 is integral with the base 22. A portion of the second surface 46 of the inner ply 40 is engaged with the first surface 48 of the outer ply 42.

In another example, the base portion 14 is thermoformed. In another example, the base portion 14 is injection molded. In another example, the base portion 14 is blow molded. In another example, the base portion 14 is rotational molded.

In one aspect of the present disclosure, the wall 24 of the base portion 14 is configured to have a greater vertical stiffness than the sidewall 16 of the package assembly 10. With a greater vertical stiffness than the sidewall 16, the base portion 14 is more resistant to collapse in the vertical direction than the sidewall 16. This greater vertical stiffness is not meant to suggest that the base portion 14 cannot be collapsed in the vertical direction, but rather the base portion 14 is more resistant to collapse in the vertical direction than the sidewall 16 under ordinary use conditions.

The sidewall 16 of the package assembly 10 is a flexible sheet or film formed from a fifth material. By the term "flexible" and variants thereof, it is meant that the sidewall 16 of the package assembly 10 is capable of being collapsed in a vertical direction. In one aspect of the present disclosure, the fifth material of the sidewall 16 can be a heat tolerant material that is transparent to microwave energy. Examples of heat tolerant materials that are transparent to microwave energy and that would be suitable for the sidewall 16 are paper, polyester, polyethylene, polyethylene terephthalate, polyethylene naphthalate, linear low-density polyethylene, polyamides, nylon, polypropylene, or combinations thereof.

In the depicted example of FIGS. 1 through 9, the sidewall 16 is formed by joining a first end of the flexible sheet with an oppositely disposed second end of the flexible sheet at a seam. In one aspect of the present disclosure, a strip of adhesive joins the first end of the flexible sheet to the second end. In another aspect, the first end is heat sealed to the second end. In another aspect, the first end is joined to the second end by a resin or glue. In another example, the sidewall 16 is blow-molded into the frusto-conical shape.

The sidewall 16 includes a first axial end portion 60 and an oppositely disposed second axial end portion 62. The first axial end portion 60 is engaged with the wall 24 of the base portion 14. In the depicted example of FIGS. 1 through 9, the first axial end portion 60 of the sidewall 16 is disposed between the inner and outer plies 40, 42 of the wall 24. In one aspect of the present disclosure, adhesive joins a portion of the first axial end portion 60 to a portion of the second surface 46 of the inner ply 40 and to a portion of the first surface 48 of the outer ply 42. In another aspect of the present disclosure, a portion of the first axial end portion 60 is heat sealed to a portion of the second surface 46 of the inner ply 40 and to a portion of the first surface 48 of the outer ply 42.

In one aspect of the present disclosure, at least a portion of the sidewall 16 of the package assembly 10 is transparent. In one example, the entire sidewall 16 is transparent. In another example, the sidewall 16 includes a window of transparent material. This transparency of the sidewall 16 allows for the transformation (e.g., the expansion) of the food product 11 to be viewed by a consumer while the package assembly 10 is being cooked/heated.

In one aspect of the present disclosure, the package assembly 10 further includes a top portion, generally designated 64. The top portion 64 is engaged with the second axial end portion 62 of the sidewall 16. The top portion 64 of the package assembly 10 includes an edge 66 that defines an opening 67 through which the interior cavity 20 can be accessed.

In one aspect of the present disclosure, the top portion 64 is configured to have a greater vertical stiffness than the sidewall 16. In the depicted example of FIGS. 1 through 3, the top portion 64 of the package assembly 10 includes an interior layer 64a of a sixth material and an exterior layer 64b of a seventh material. The sixth and seventh materials of the interior and exterior layers 64a, 64b are heat tolerant materials that are transparent to microwave energy. In one aspect of the present disclosure, the sixth and seventh materials are the same. In another aspect, the sixth and seventh materials are different. In one example, the sixth material of the interior layer 64a can be a grease proof paper. In another example, the sixth and seventh materials of the interior and exterior layers 64a, 64b can be paper, paperboard, fiberboard, cardboard, plastics such as polyester, ethylene vinyl alcohol, polyamides (e.g., nylon), polypropylene, recycled polyethylene terephthalate (rPET), crystallized polyethylene terephthalate (CPET) such as carbon-loaded CPET, combinations thereof, and so on.

In one aspect of the present disclosure, the interior and exterior layers 64a, 64b of the top portion 64 are configured to engage the second axial end portion 62 of the sidewall 16. In one example, the second axial end portion 62 of the sidewall 16 is disposed between the interior and exterior layers 64a, 64b.

In another example, the top portion 64 is thermoformed. In another example, the top portion 64 is injection molded.

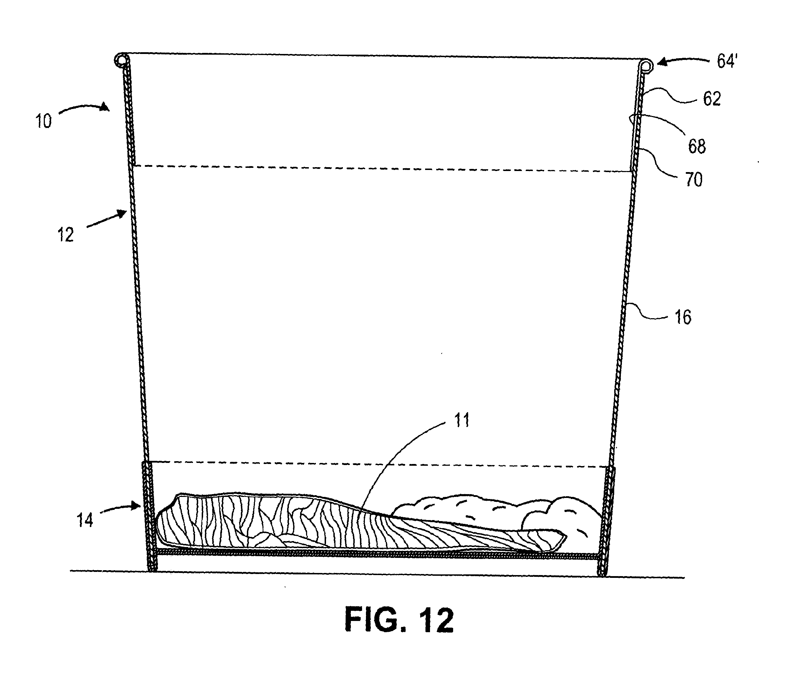

Referring now to FIG. 12, another example of a top portion 64' is shown. In the depicted example of FIG. 12, the top portion 64 of the package assembly 10 is formed from a single layer 68 of an eighth material, where the eighth material can include paper, paperboard, fiberboard, cardboard, plastics such as polyester, ethylene vinyl alcohol, polyamides (e.g., nylon), combinations thereof, and so on. In one aspect of the present disclosure, an outer surface 70 of the single layer 68 is configured for engagement (e.g., adhesive, heat sealing, etc.) with the second axial end portion 62 of the sidewall 16. In another aspect of the present disclosure, an inner surface of the single layer 68 is engaged (e.g., adhesive, heat sealing, etc.) to the second axial end portion 62 of the sidewall 16.

The container 12 may further include one or more rings 65 that are configured to aid in maintaining the shape of the sidewall 16 to support the sidewall 16 when the package assembly 10 is in the extended state. For instance, the package assembly 10 illustrated in FIGS. 5 and 9 includes a container 12 having a center ring 65a that is configured to engage the sidewall 16 to divide the sidewall 16 into upper and lower sidewall portions 16a and 16b, respectively. As shown in FIG. 9, the center ring 65a may include an inner ring member 65b disposed interior to the sidewall 16 and an outer ring member 65c disposed exterior to the sidewall 16, with a portion 16c of the sidewall 16 laminated there between. The sidewall 16 may also employ a two-piece construction wherein the lower edge of the upper sidewall portion 16a and the upper edge of the lower sidewall portion 16b are sandwiched between inner and outer ring members 65b, 65c. Moreover, it is contemplated that the center ring 65a may include only the outer ring member 65c without a corresponding inner ring member 65b, or an inner ring member 65b without a corresponding outer ring member 65c.

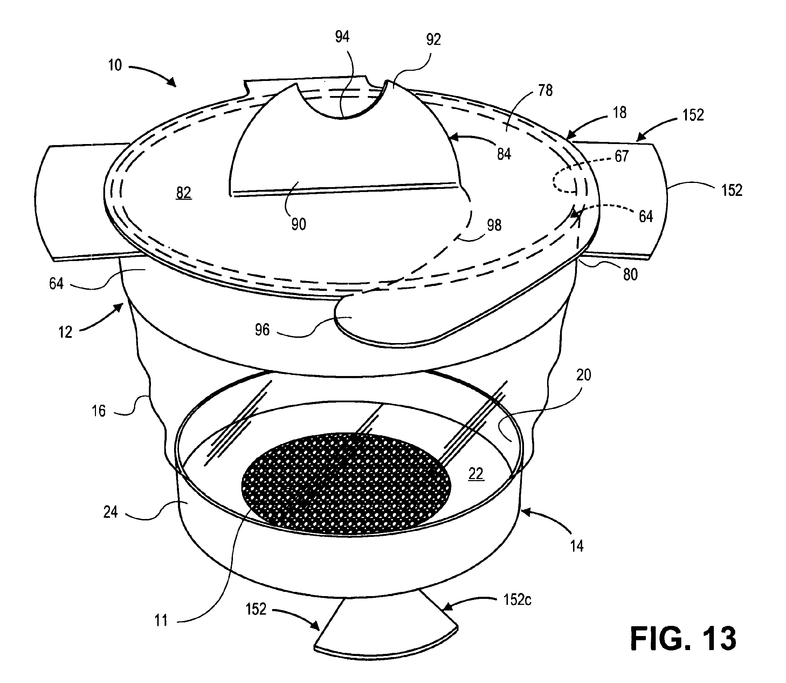

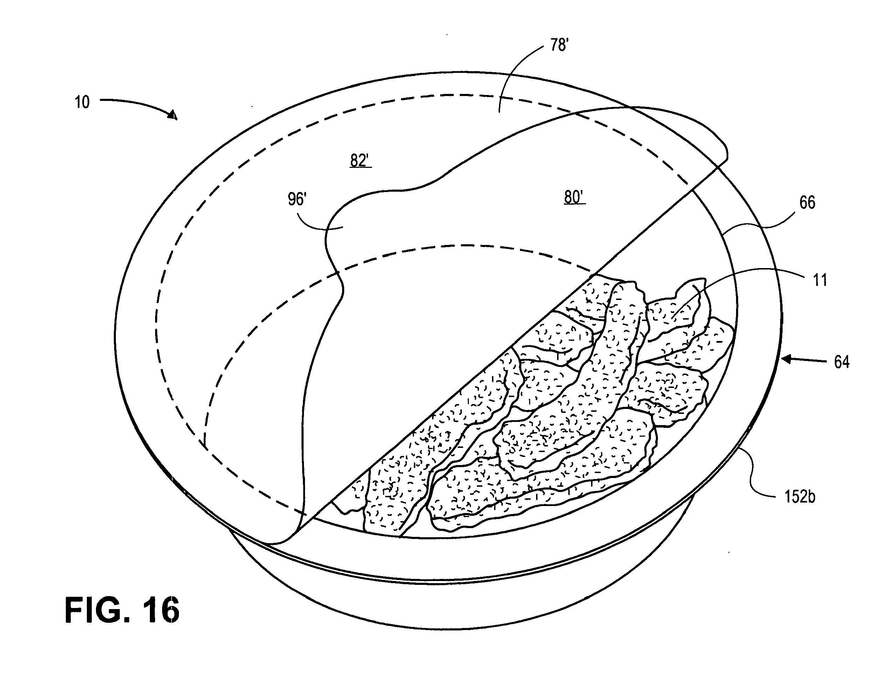

The package assembly 10 may further include one or more handles or tabs 152 configured to allow a consumer to lift and/or otherwise manipulate the package assembly 10 after heating (e.g., to remove the package assembly 10 from a microwave oven, to remove the cover assembly 18 from the container 12, and so on), when the food product 11 and package assembly 10 may be hot. In FIG. 13 the package assembly 10 is illustrated as including handles 152a that are engaged with, and extend from, opposite sides of the top portion 64 of the container 12 adjacent to the edge 66 of the container 12. In one example, the handles 152a are affixed to the top portion 64. In another example, the handles 152a are integral with the top portion 64. In other implementations, such as the implementation shown in FIG. 16, the handles 152b may be continuous and/or integrated with the edge 66 of the container 12.

The package assembly 10 is further illustrated as including a tab 152c that is engaged to the axial end 39 of the base portion 14. The tab 152c extends outwardly from the axial end 39 of the wall 24 of the base portion 14. In one example, the tab 152c is affixed to the wall 24 of the base portion 14. In another example, the tab 152c is integral with the wall 24 of the base portion 14.

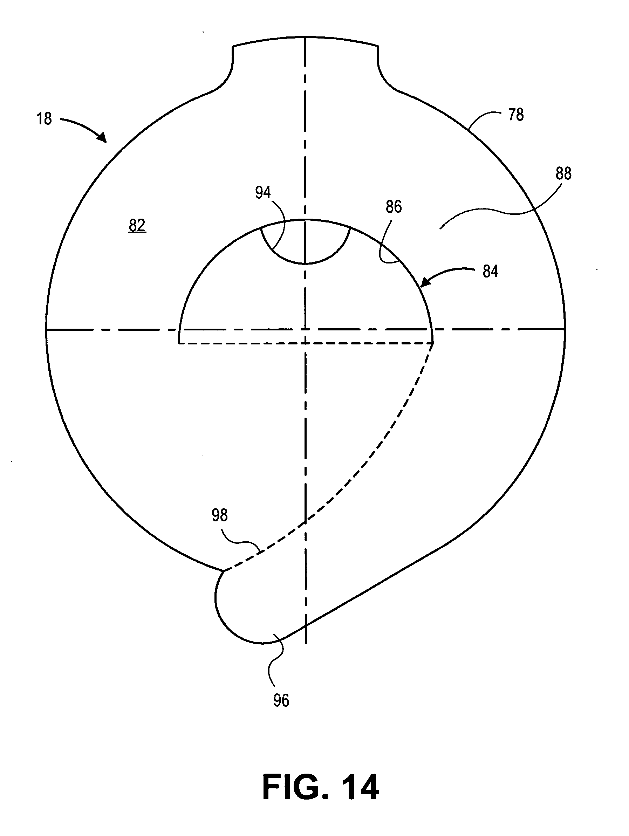

Referring now to FIGS. 3 and 14, the cover assembly 18 is shown. The cover assembly 18 is configured for engagement with the top portion 64 of the package assembly 10 such that opening 67 of the package assembly 10 is at least partially covered during storing and cooking/heating. The cover assembly 18 is further configured for removal from the top portion 64 such that the opening 67 of the package assembly 10 is uncovered.

In one aspect of the disclosure, the cover assembly 18 includes a cover 78 having a first surface 80 and an oppositely disposed second surface 82. The first surface 80 is configured for engagement with the top portion 64 of the package assembly 10. In one example, the first surface 80 is affixed to the top portion 64 of the package assembly 10 with releasable adhesive. In another example, the first surface 80 is heat sealed to the top portion 64.

In one aspect of the present disclosure, the cover 78 includes a flap, generally designated 84, disposed in a central opening 86 of a central portion 88 of the cover 78. The flap 84 includes a base portion 90 that is at least partially engaged to the cover 78 and a free end 92. The free end 92 of the flap 84 is moveable between a folded position (shown in FIG. 14), in which the free end 92 is generally flush with the cover assembly 18, and an upright position (shown in FIG. 3), in which the free end 92 is angularly displaced from the second surface 82 of the cover assembly 18. In another aspect of the present disclosure, the free end 92 of the flap 84 defines a notch 94 that is configured to receive a finger of a user for moving the free end 92 of flap 84 between the folded position and upright position. In one example, the flap 84 is configured in a semi-circular shape. The purpose of the flap 84 will be described in greater detail subsequently.

In one aspect of the present disclosure, the cover 78 includes a release tab 96. The release tab 96 extends outwardly from the perimeter of the top portion 64 of the package assembly 10. In another aspect of the present disclosure, a plurality of perforations 98 extends from the release tab 96 to the central opening 86 of the cover assembly 18. In one example, the plurality of perforations 98 forms a curvilinear (e.g., spiral) line between the release tab 96 and the central opening 86.

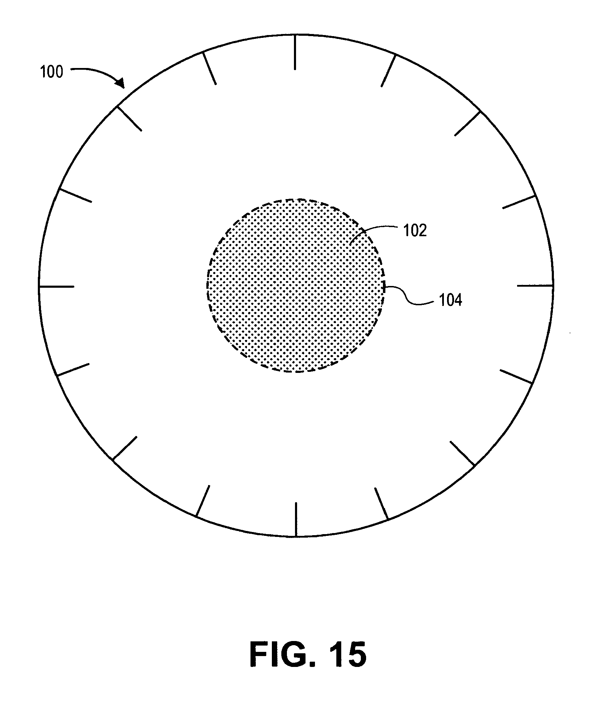

Referring now to FIGS. 14 and 15, in another aspect of the present disclosure, the cover assembly 18 includes a film 100 (shown in FIG. 15) that is configured to be affixed to the first surface 80 of the cover 78. In one example, the film 100 is configured to cover the entire first surface 80 of the cover 78. In another example, the film 100 is configured to cover only the central portion 88 of the cover 78.

In one aspect of the present disclosure, the film 100 is a thin layer formed from a material such as polyester, polyethylene, polyethylene terephthalate, polyethylene naphthalate, linear low-density polyethylene, polyamides, nylon, polypropylene, combinations thereof, and so on. The film 100 includes an area of weakness 102. The area of weakness 102 is configured to vent pressure generated in the package assembly 10 during cooking/heating when the pressure in the package assembly 10 increases beyond a threshold value. In one example, the area of weakness 102 is a plurality of microscopic pores 104. In one aspect of the present disclosure, the plurality of pores 104 are disposed in a central area 106 of the film 100 such that the plurality of pores 104 are aligned with the central opening 86 of the cover 78 when the film 100 is affixed to the cover 78.

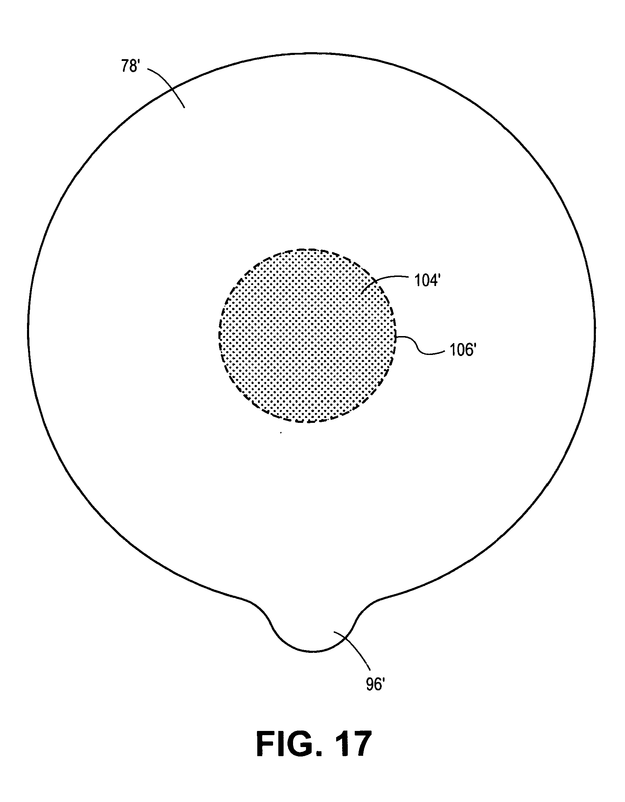

Referring now to FIGS. 16 and 17, another example of a cover 78' is shown. In this example, the cover 78' includes a first surface 80' and an oppositely disposed second surface 82'. The first surface 80' is configured for engagement with the top portion 64 of the package assembly 10. In one example, the first surface 80' is affixed to the top portion 64 of the package assembly 10 with releasable adhesive. In another example, the first surface 80' is heat sealed to the top portion 64.

In one aspect of the present disclosure, the cover 78' includes a release tab 96'. The release tab 96' that is configured to extend outwardly from the perimeter of the top portion 64 of the package assembly 10 and that is configured for grasping in order to remove the cover 78' from the top portion 64.

In another aspect of the present disclosure, the container 12 includes an area of weakness that is configured to vent pressure in the package assembly 10 during cooking when the pressure exceeds a threshold value. In one aspect of the present disclosure, the area of weakness is disposed at the interface between the cover 78' and the top portion 64. In another aspect of the present disclosure, the area of weakness is disposed on the cover 78'. In one aspect of the present disclosure, the area of weakness is a plurality of pores 104' disposed in a central region 106' of the cover 78'.

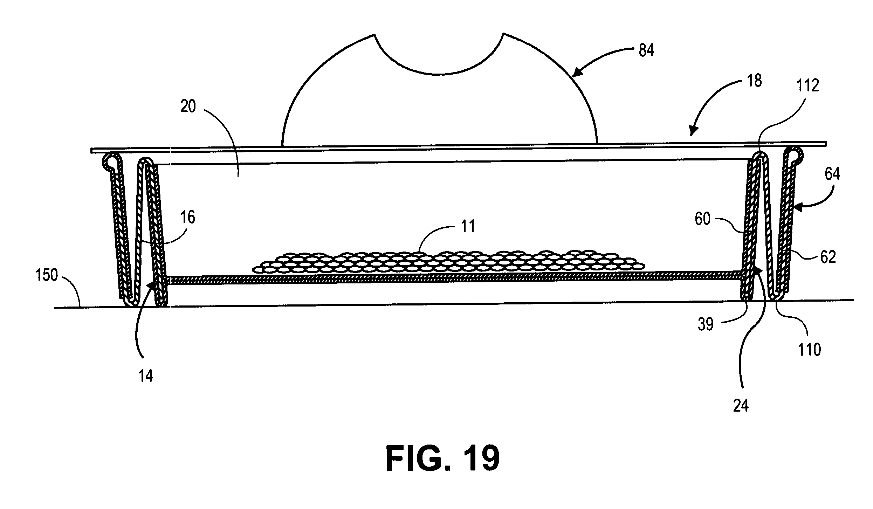

Referring now to FIGS. 18 and 19, the package assembly 10 is shown in the collapsed state. In the collapsed state, the sidewall 16 is vertically compressed such that the top portion 64 of the package assembly 10 is immediately adjacent to the base portion 14. In this collapsed state, the opening 66 of the top portion 64 is adjacent to the base portion 14. In one aspect of the present disclosure, a plane in which the opening 67 is disposed is generally parallel with the surface on which the axial end 39 of the base portion 14 rests.

In the collapsed state, the sidewall 16 is compressed such that the top portion 64 surrounds the base portion 14 in one aspect of the present disclosure. In another aspect of the present disclosure, the sidewall 16 of the package assembly 10 is compressed in the collapsed state such that a portion of the top portion 64 surrounds a portion of the base portion 14. In another aspect, the sidewall 16 of the package assembly 10 is compressed in the collapsed state such that the top portion 64 is disposed immediately above the base portion 14.

In the depicted example of FIG. 19, the sidewall 16 is compressed by folding the sidewall 16 over the wall 24 of the base portion 14 such that the sidewall 16 and the top portion 64 surround the wall 24 of the base portion 14. In one aspect of the present disclosure, the compressed sidewall 16 includes a first bend 110 disposed adjacent to the second axial end portion 62 and a second bend 112 at which at least a portion of the sidewall 16 is bent over at least another portion of the sidewall 16. As the sidewall 16 is compressed, the location of the second bend 112 moves downs the sidewall 16 from a position adjacent the second axial end portion 62 to a location adjacent the first axial end portion 60.

In one aspect of the present disclosure, the package assembly 10 is retained in the collapsed state by the second bend 112 of the sidewall 16. In another aspect of the present disclosure, the package assembly 10 is retained in the collapsed state by packaging material (e.g., paper, paperboard, cardboard, shrink wrap, etc.) disposed around the package assembly 10.

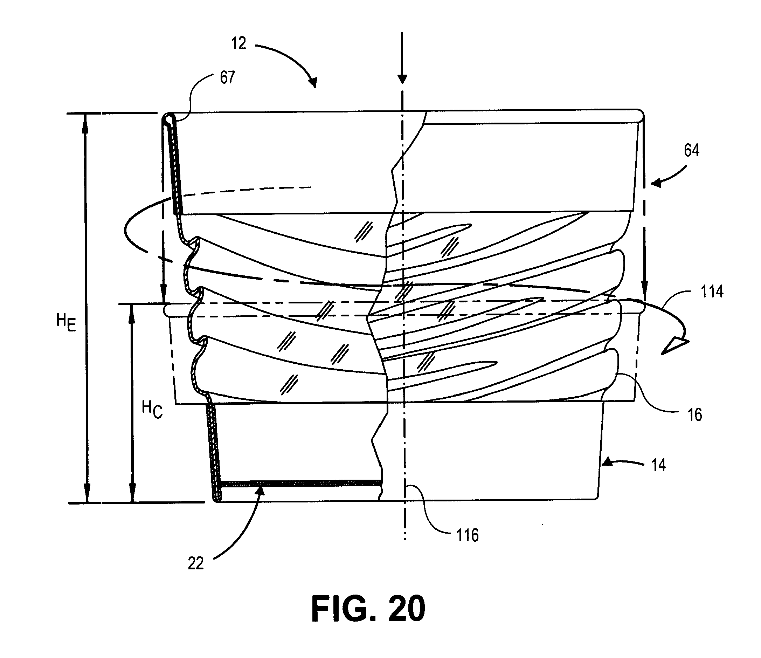

Referring now to FIG. 20, another example of compressing the sidewall 16 is shown. In this example, the sidewall 16 is compressed by rotating the top portion 64 of the package assembly 10 relative to the base portion 14 in a rotational direction 114 (shown as a dashed arrow in FIG. 20) about a longitudinal axis 116 that extends through the center of the base 22 and the center of the opening 67.

As the top portion 64 is rotated about the longitudinal axis 116, the sidewall 16 twists about the longitudinal axis 116. As the sidewall 16 twists, the sidewall 16 compresses such that the height of the container 12 decreases from the extended height H_{E} to the compressed height H_{C}.

In one aspect of the present disclosure, the sidewall 16 of the container 12 is retained in the twisted position by a light (e.g., releasable) adhesive that bonds a portion of the top portion 64 to a portion of the base portion 14. In another aspect of the present disclosure, the sidewall 16 of the container 12 is retained in the twisted position of the collapsed state by packaging material (e.g., paper, paperboard, cardboard, shrink wrap, etc.) disposed around the container 12.

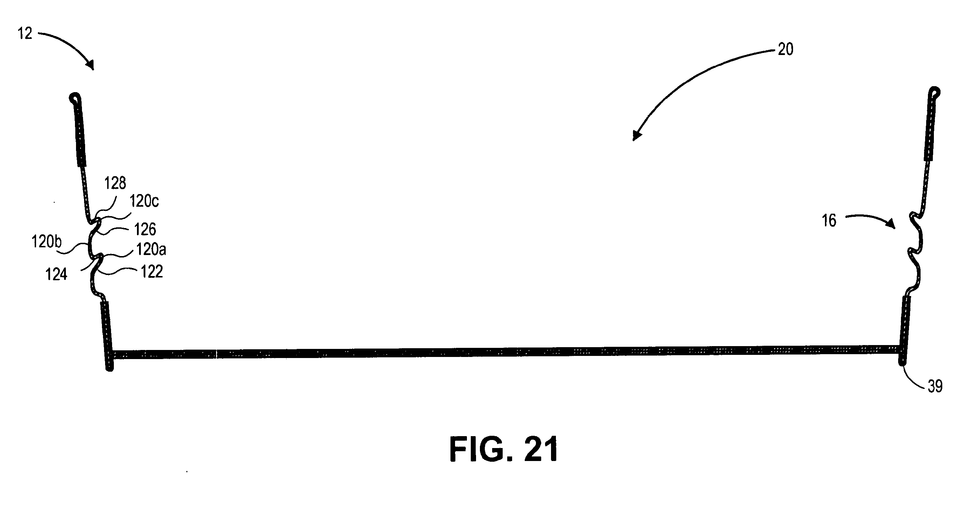

Referring now to FIG. 21, a schematic representation of another example of compressing the sidewall 16 is shown. In one aspect of the present disclosure, the sidewall 16 includes accordion-style folds 120. In the depicted example of FIG. 21, the sidewall 16 includes a first fold 120a; a second fold 120b; and a third fold 120c. The first, second and third folds 120a, 120b, 120c of the depicted example of FIG. 21 are generally parallel folds. The first, second and third folds 120a, 120b, 120c provide folding lines that separate the sidewall 16 into a first panel 122, a second panel 124, a third panel 126 and a fourth panel 128. The first fold 120a is disposed between the first panel 122 and the second panel 126. The second fold 120b is disposed between the second panel 124 and the third panel 126 while the third fold 120c is disposed between the third panel 126 and the fourth panel 128.

In the collapsed state, the sidewall 16 is compressed such that at least a portion of the first panel 122 overlays at least a portion of the second panel 124, at least a portion of the second panel 124 overlays at least a portion of the third panel 126 and at least a portion of the third panel 126 overlays at least a portion of the fourth panel 128. In one aspect of the present disclosure, at least a portion of each of the first, second, third and fourth panels 122, 124, 126, 128 extends inwardly toward the interior region 20 of the container 12 in the collapse state. In another aspect of the present disclosure, the first, second, third and fourth panels 122, 124, 126, 128 of the sidewall 16 are generally parallel to the surface on which the axial end 39 is disposed when the container 12 is in the collapsed state.

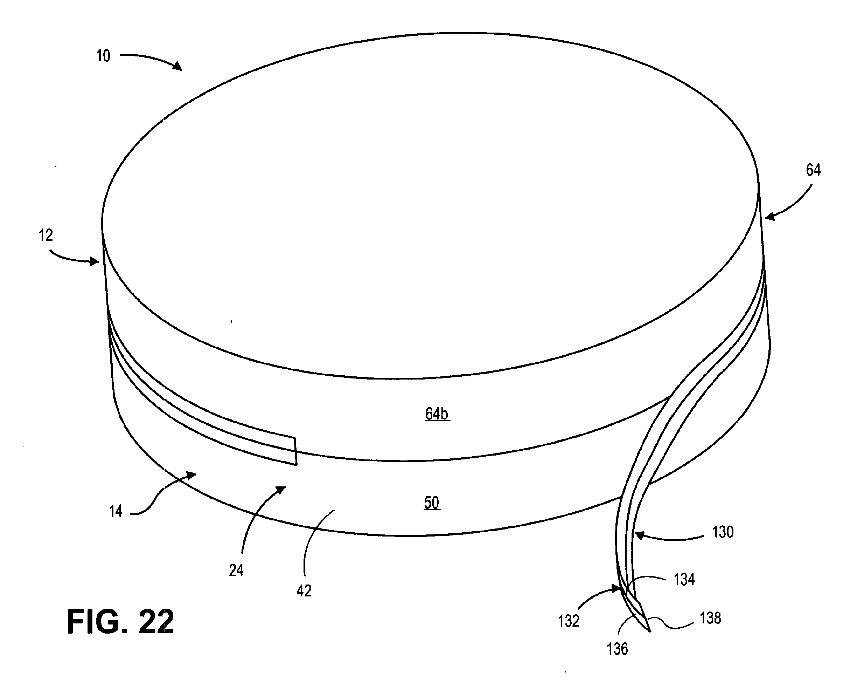

Referring now to FIG. 22, the container 12 may be held in the collapsed state by a suitable securing mechanism. For example, in FIG. 22, a release strip 130 that is configured to hold the container 12 in the collapsed state is shown. In the depicted example of FIG. 22, the release strip 130 is a thin strip of material that is configured for affixation to the container 12. The release strip 130 includes an inner surface 132.

In one aspect of the present disclosure, with the container 12 in the collapsed position, the inner surface 132 includes a first portion 134 that is configured for affixation to the exterior layer 64b of the top portion 64 and a second portion 136 that is configured for affixation to the second surface 50 of the outer ply 42 of the wall 24 of the base portion 14. In one example, the release strip 130 includes a releasable adhesive disposed on the inner surface 132 that is configured to be affixed to the container 12. In another example, releasable adhesive is disposed on the base portion 14 and the top portion 64 of the container 12.

The release strip 130 extends at least partially around the container 12. The release strip 130 includes an end 138 that is configured for grasping in order to remove the release strip 130 from the container 12. In one aspect of the present disclosure, the end 138 is not affixed to the container 12.

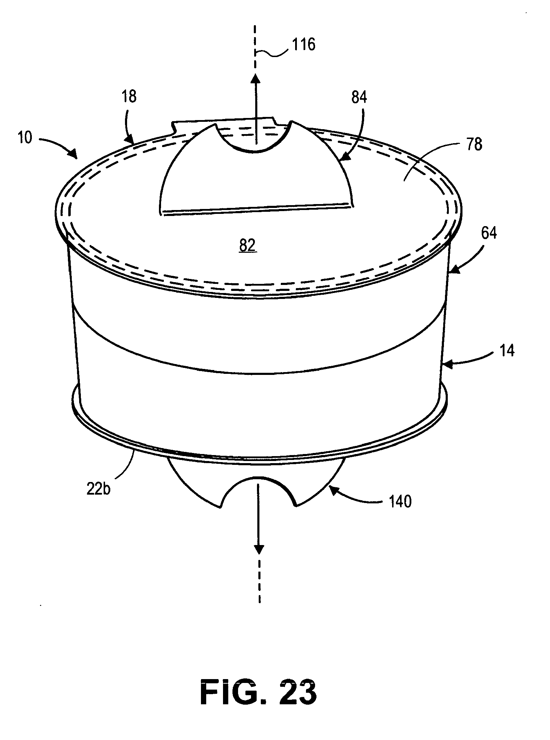

Referring now to FIG. 23, another example of the package assembly 10 is shown. In one aspect of the present disclosure, the package assembly 10 is generally symmetrical in the collapsed state with regard to a horizontal plane that is disposed between the base portion 14 and the top portion 64. The base portion 14 includes a base flap 140 that is manually movable between a flush position, in which the base flap 140 is generally flush with the outer layer 22b, and a raised position, in which the base flap 140 is angularly displaced from the outer layer 22b. In one aspect of the present disclosure, the base flap 140 includes a shape and features that are similar to the flap 84 (shown in FIG. 3) disposed on the cover 78 of the cover assembly 18. The purpose of the base flap 140 will be described in greater detail subsequently.

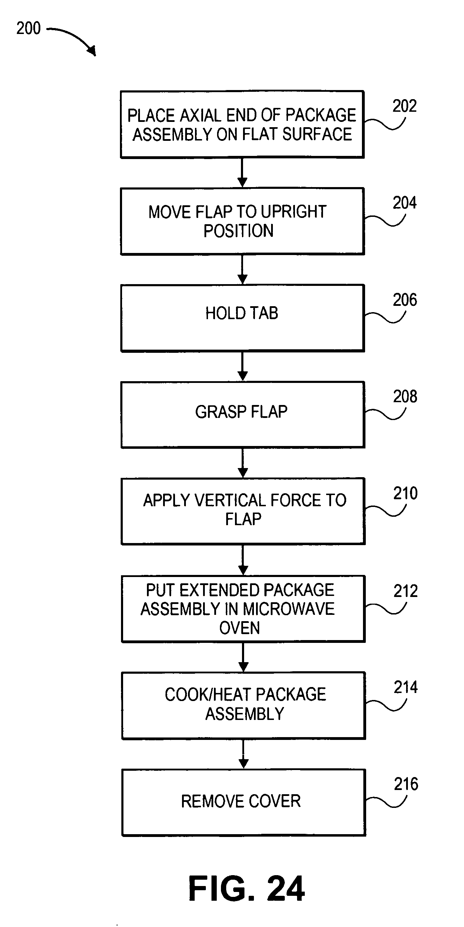

FIGS. 24 through 27 illustrate procedures 200, 300, 400, 500 in example implementations that are suitable for use with the package assembly 10 of FIGS. 1 through 23 to prepare the contents (e.g., food product 11) thereof. The procedures 200, 300, 400, 500 may be embodied as a set of instructions. The set of instructions may be disposed on a label affixed to the package assembly 10 (e.g., printed on the container 12), or associated there with. The set of instructions include instructions that direct a consumer to prepare the food product 11 using the package assembly 10. In one aspect of the present disclosure, the sets of instructions can include text, graphics, symbols, colors, and so forth. Further, it will be appreciated that the various instructions provided by the sets of instructions may be altered (e.g., instructions may be added, deleted, or modified) without departing from the scope of the present disclosure.

Referring now to FIG. 24 (which method is not essential), with continued reference to FIGS. 1 through 23, an example procedure 200 for expanding the package assembly 10 will be described. In step 202, the axial end 39 of the base portion 14 of the package assembly 10 is placed on a flat surface 150, such as a surface of a microwave oven, a countertop, and so on. With the axial end 29 on the flat surface 150, the second surface 82 of the cover assembly 18 and/or the plane in which the opening 67 is disposed is generally parallel with the flat surface 150. In step 204, the flap 84 is moved from the folded position, in which the flap 84 is generally flush with the second surface 82 of the cover assembly 18, to the upright position.

In step 206, the tab 152b that is engaged to the axial end 39 of the base portion 14 is held against the flat surface 150 by the consumer. With the tab 152 held against the flat surface 150, the flap 84, which is disposed in the upright position, is grasped by the consumer in step 208.

In step 210, a vertical force is applied to the flap 84 by the consumer. The application of this vertical force to the flap 84 results in the extension of the compressed sidewall 16. As the vertical force is applied, the opening 67 of the top portion 64, which is covered by the cover assembly 18, is vertically displaced from the base portion 14. The vertical force is applied until the package assembly 10 is in the extended state.

In step 212, the package assembly 10 is placed into a microwave oven. In step 214, the package assembly 10 is heated in the microwave oven until the food product 11 is ready for consumption.

In step 216, the cover assembly 18 of the package assembly 10 is removed from the top portion 64 after the package assembly 10 has been cooked/heated in the microwave oven to expose the opening 67 of the top portion 64, through which the food product 11 disposed in the interior cavity 20 of the package assembly 10 can be accessed. In one aspect of the present disclosure, the cover assembly 18 is removed by grasping the release tab 96 on the cover 78 and applying a force to the release tab 96 such that the cover 78 tears along the plurality of perforations 98. With the cover assembly 18 removed, the food product 11 disposed in the interior cavity 20 can be directly accessed through the opening 67 of the package assembly 10.

In one aspect of the present disclosure, the procedure 200 is provided in the form of instructions that are included with the package assembly 10. In another aspect of the present disclosure, these instructions are provided on the packaging of the package assembly 10. In another aspect of the present disclosure, these instructions are provided directly on the package assembly 10.

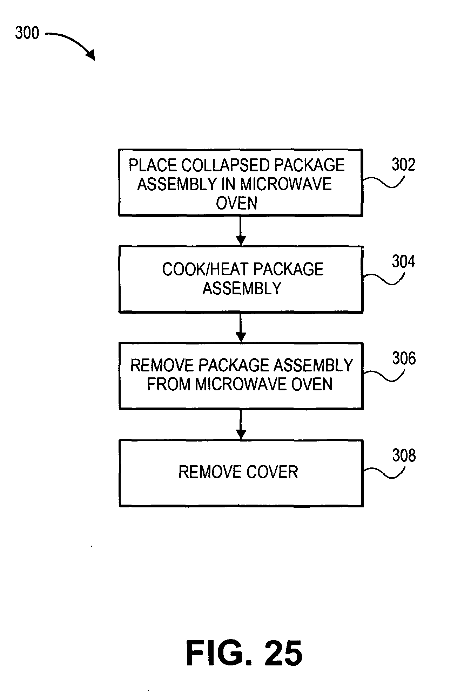

Referring now to FIG. 25, with continued reference to FIGS. 1 through 23, another example procedure 300 for expanding the package assembly 10 will be described. In step 302, the package assembly 10 in the collapsed state is placed into a microwave oven such that the axial end 39 of the base portion 14 rests on a surface of the microwave oven. In one aspect of the present disclosure, the flap 84 is moved to the upright position before or after the package assembly 10 is placed in the microwave oven but before the package assembly 10 is cooked/heated.

In step 304, the package assembly 10 is heated in the microwave oven. As the package assembly 10 is heated, steam develops within the interior cavity 20 of the container 12. As the pressure within the interior cavity 20 increases due to the steam, the container 12 expands to the extended height H_{E}. In one aspect of the present disclosure, with the container 12 in the extended state, the pressure in the interior cavity 20 is vented through the plurality of pores 104 (shown in FIG. 15) in the cover assembly 18 when the pressure reaches a threshold value.

In step 306, the package assembly 10 is removed from the microwave oven. In step 308, the cover assembly 18 of the package assembly 10 is removed from the

top portion 64 after the package assembly 10 has been cooked/heated in the microwave oven to expose the opening 67 of the top portion 64, through which the food product 11 disposed in the interior cavity 20 of the package assembly 10 can be accessed. In one aspect of the present disclosure, the cover assembly 18 is removed by grasping the release tab 96 on the cover 78 and applying a force to the release tab 96 such that the cover 78 tears along the plurality of perforations 98. With the cover assembly 18 removed, the food product 11 disposed in the interior cavity 20 can be directly accessed through the opening 67 of the package assembly 10.

In one aspect of the present disclosure, the procedure 300 is provided in the form of instructions that are included with the package assembly 10. In another aspect of the present disclosure, these instructions are provided on the packaging of the package assembly 10. In another aspect of the present disclosure, these instructions are provided directly on the package assembly 10.

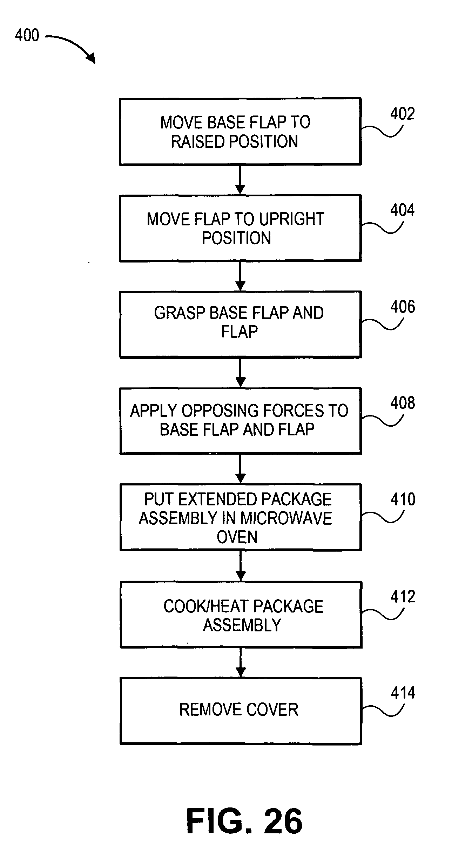

Referring now to FIG. 26 (which method is not essential), with continued reference to FIGS. 1 through 23, an example procedure 400 for expanding the package assembly 10 will be described. In step 402, the base flap 140 of the base portion 14 is moved to the raised position. In step 404, the flap 84 disposed on the cover assembly 18 is moved from the folded position, in which the flap 84 is generally flush with the second surface 82 of the cover assembly 18, to the upright position. In step 406, each of the base flap 140, which is disposed in the raised position, and the flap 84, which is disposed in the upright position, is grasped by the consumer. In step 408, forces (shown as arrows in FIG. 23) are applied to the base flap 140 and the flap 84 in the direction of the longitudinal axis 116 of the package assembly 10 by the consumer such that the force applied to the base flap 140 is opposite the force applied to the flap 84. The application of these opposing forces to the base flap 140 and the flap 84 results in the extension of the compressed sidewall 16. As the opposing forces are applied, the plane in which the opening 67 is disposed is displaced from the base portion 14 in the direction of the longitudinal axis 116. The opposing forces are applied until the package assembly 10 is in the extended state.

In step 410, the extended package assembly 10 is placed into a microwave oven. In step 412, the package assembly 10 is heated in the microwave oven until the food product 11 is ready for consumption.

In step 414, the cover assembly 18 of the package assembly 10 is removed from the top portion 64 after the package assembly 10 has been cooked/heated in the microwave oven to expose the opening 67 of the top portion 64, through which the food product 11 disposed in the interior cavity 20 of the package assembly 10 can be accessed. With the cover assembly 18 removed, the food product 11 disposed in the interior cavity 20 can be directly accessed through the opening 67 of the package assembly 10.

In one aspect of the present disclosure, the procedure 400 is provided in the form of instructions that are included with the package assembly 10. In another aspect of the present disclosure, these instructions are provided on the packaging of the package assembly 10. In another aspect of the present disclosure, these instructions are provided directly on the package assembly 10.

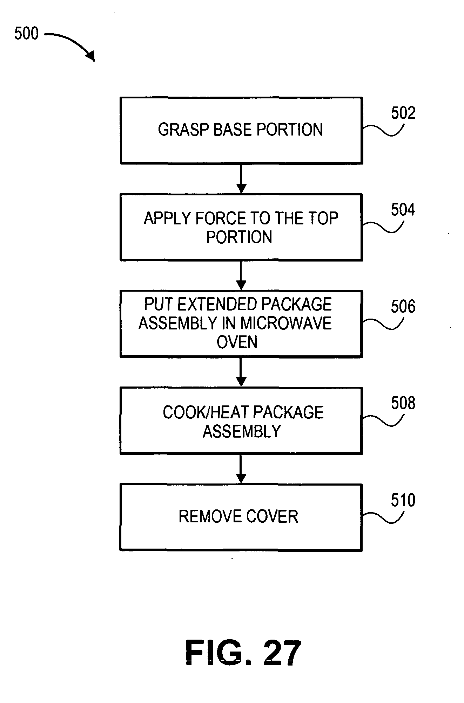

Referring now to FIG. 27, with continued reference to FIGS. 1 through 23, another example procedure 500 for expanding the package assembly 10 will be described. In step 502, the base portion 14 of the package assembly 10 is grasped by the consumer. In step 504, a force is applied to the top portion 64 of the package assembly 10 in a direction away from the base portion. The application of this force to the top portion 64 results in the extension of the compressed sidewall 16. As the force is applied, the plane, in which the opening 67 is disposed, is displaced from the base portion 14 in the direction of the longitudinal axis 116. The force is applied until the package assembly 10 is in the extended state.

In step 506, the package assembly 10 is placed into a microwave oven. In step 508, the package assembly 10 is heated in the microwave oven until the food product 11 is ready for consumption.

In step 510, the cover assembly 18 of the package assembly 10 is removed from the top portion 64 after the package assembly 10 has been cooked/heated in the microwave oven to expose the opening 67 of the top portion 64, through which the food product 11 disposed in the interior cavity 20 of the package assembly 10 can be accessed. With the cover assembly 18 removed, the food product 11 disposed in the interior cavity 20 can be directly accessed through the opening 67 of the package assembly 10.

In one aspect of the present disclosure, the procedure 500 is provided in the form of instructions that are included with the package assembly 10. In another aspect of the present disclosure, these instructions are provided on the packaging of the package assembly 10. In another aspect of the present disclosure, these instructions are provided directly on the package assembly 10.

## Claims

1. A package assembly (10) comprising:
a container (12) configured for expansion in a generally vertical direction between a collapsed state and an extended state, the container including:
a sidewall (16) having a first axial end portion (60) and an oppositely disposed second axial end portion (62), wherein the sidewall is vertically compressed in the collapsed state and configured to expand in a generally vertical direction to the extended state;
a base portion (14) engaged with the first axial end portion of the sidewall, the base portion having a base (22), the base portion and the sidewall cooperatively defining an interior region (20), comprising a food product (11) disposed therein, having an opening, wherein the opening is vertically displaced from the base during expansion; and
a cover (18) engaged with the second axial end portion of the sidewall, wherein the cover is configured for at least partially covering the opening to the interior region during storing and cooking or heating;
and further wherein the food product expands when cooked or heated and wherein the expansion of the food product causes the sidewall to expand in the generally vertical direction to the extended state, or the food product releases steam when cooked or heated to cause the sidewall to expand in the generally vertical direction to the extended state.

2. A package assembly as recited in claim 1, wherein the food product is a popcorn product.

3. A package assembly as recited in claim 1, wherein the sidewall is transparent.

4. A package assembly as recited in claim 1, wherein the base portion has a greater vertical stiffness than the sidewall.

5. A package assembly as recited in claim 1, wherein the base portion includes a microwave susceptor (38).

6. A package assembly as recited in claim 1, wherein the container is generally frusto-conical in shape.

7. A package assembly as recited in claim 1, wherein the sidewall is compressed in the collapsed state by folding at least a portion of the sidewall over at least a portion of the base portion such that the portion of the sidewall surrounds the portion of the base portion.

8. A package assembly as recited in claim 1, wherein the cover includes a plurality of pores (104) that are configured to vent pressure in the container when the pressure in the container exceeds a threshold value.

9. The package assembly as recited in claim 1, wherein the cover comprises a central opening formed therein, a release tab (96), and a plurality of perforations (98) extending from the release tab to the central opening in a curvilinear line, and wherein the release tab is configured to be pulled to open the cover along the plurality of perforations.

10. The package assembly as recited in claim 9, wherein the cover further comprises a film.

11. The package assembly as recited in claim 1, further comprising at least one of a handle (152) or a tab (152c) configured to facilitate gripping of the container.

12. The package assembly as recited in claim 1, wherein the container comprises a securing mechanism (130) configured to hold the container in the collapsed state.

13. The package assembly as recited in claim 12, wherein the securing mechanism comprises a release strip (130).

14. A package assembly as recited in claim 1, wherein the sidewall includes accordion-style folds configured for compressing the sidewall in the collapsed state.

## Patentansprüche

1. Verpackungsbaugruppe (10), die Folgendes umfasst:
einen Behälter (12), der so konfiguriert ist, dass er in einer allgemein vertikalen Richtung zwischen einem zusammengefalteten Zustand und einem ausgedehnten Zustand expandieren kann, wobei der Behälter Folgendes beinhaltet:
eine Seitenwand (16) mit einem ersten axialen Endabschnitt (60) und einem gegenüberliegend angeordneten zweiten axialen Endabschnitt (62), wobei die Seitenwand im zusammengefalteten Zustand vertikal komprimiert und so konfiguriert ist, dass sie in einer allgemein vertikalen Richtung in den ausgedehnten Zustand expandiert;
einen Basisabschnitt (14), der mit dem ersten axialen Endabschnitt der Seitenwand im Eingriff ist, wobei der Basisabschnitt eine Basis (22) aufweist, wobei der Basisabschnitt und die Seitenwand zusammenwirkend eine Innenregion (20) zur Aufnahme eines Lebensmittelprodukts (11) darin definieren, mit einer Öffnung, wobei die Öffnung beim Expandieren vertikal von der Basis verschoben wird; und
einen Deckel (18), der mit dem zweiten axialen Endabschnitt der Seitenwand im Eingriff ist, wobei der Deckel zum wenigstens teilweisen Abdecken der Öffnung zur Innenregion beim Lagern und Kochen oder Erhitzen konfiguriert ist;
und wobei das Lebensmittelprodukt ferner beim Kochen oder Erhitzen expandiert und wobei die Expansion des Lebensmittelprodukts bewirkt, dass die Seitenwand in der allgemein vertikalen Richtung in den ausgedehnten Zustand expandiert oder das Lebensmittelprodukt beim Kochen oder Erhitzen Dampf ablässt, um zu bewirken, dass die Seitenwand in der allgemein vertikalen Richtung in den ausgedehnten Zustand expandiert.

2. Verpackungsbaugruppe nach Anspruch 1, wobei das Lebensmittelprodukt ein Popcorn-Produkt ist.

3. Verpackungsbaugruppe nach Anspruch 1, wobei die Seitenwand transparent ist.

4. Verpackungsbaugruppe nach Anspruch 1, wobei der Basisabschnitt eine höhere vertikale Steifigkeit hat als die Seitenwand.

5. Verpackungsbaugruppe nach Anspruch 1, wobei der Basisabschnitt einen Mikrowellensuszeptor (38) beinhaltet.

6. Verpackungsbaugruppe nach Anspruch 1, wobei der Behälter allgemein kegelstumpfförmig ist.

7. Verpackungsbaugruppe nach Anspruch 1, wobei die Seitenwand im zusammengefalteten Zustand durch Falten wenigstens eines Abschnitts der Seitenwand über wenigstens einen Abschnitt des Basisabschnitts komprimiert wird, so dass der Abschnitt der Seitenwand den Abschnitt des Basisabschnitts umgibt.

8. Verpackungsbaugruppe nach Anspruch 1, wobei der Deckel mehrere Poren (104) aufweist, die so konfiguriert sind, dass sie Druck im Behälter ablassen, wenn der Druck im Behälter einen Schwellenwert übersteigt.

9. Verpackungsbaugruppe nach Anspruch 1, wobei der Deckel Folgendes umfasst: eine darin ausgebildete zentrale Öffnung, eine Ablösezunge (96) und mehrere Perforationen (98), die in einer gekrümmten Linie von der Ablösezunge zu der zentralen Öffnung verlaufen, und wobei die Ablösezunge zum Ziehen daran konfiguriert ist, um den Deckel entlang der mehreren Perforationen zu öffnen.

10. Verpackungsbaugruppe nach Anspruch 9, wobei der Deckel ferner eine Folie umfasst.

11. Verpackungsbaugruppe nach Anspruch 1, die ferner einen Griff (152) und/oder eine Zunge (152c) umfasst, die zum Erleichtern des Ergreifens des Behälters konfiguriert ist/sind.

12. Verpackungsbaugruppe nach Anspruch 1, wobei der Behälter einen Sicherungsmechanismus (130) umfasst, der zum Halten des Behälters im zusammengefalteten Zustand konfiguriert ist.

13. Verpackungsbaugruppe nach Anspruch 12, wobei der Sicherungsmechanismus einen Ablösestreifen (130) umfasst.

14. Verpackungsbaugruppe nach Anspruch 1, wobei die Seitenwand ziehharmonikaartige Falten aufweist, die zum Komprimieren der Seitenwand im zusammengefalteten Zustand konfiguriert sind.

## Revendications

1. Ensemble emballage (10) comprenant :
un contenant (12) configuré pour une extension dans une direction généralement verticale entre un état aplati et un état déployé, le contenant comprenant :
une paroi latérale (16) comportant une première partie formant une extrémité axiale (60) et une deuxième partie formant une extrémité axiale disposée de façon opposée (62), la paroi latérale étant comprimée verticalement dans l'état aplati et configurée pour s'étendre dans une direction généralement verticale jusqu'à l'état déployé ;
une partie de base (14) en prise avec la première partie formant une extrémité axiale de la paroi latérale, la partie de base comportant une base (22), la partie de base et la paroi latérale coopérant pour délimiter une région intérieure (20), comprenant un produit alimentaire (11) disposé à l'intérieur de ladite région intérieure, comportant une ouverture, l'ouverture étant éloignée verticalement de la base durant l'extension ; et
un couvercle (18) en prise avec la deuxième partie formant une extrémité axiale de la paroi latérale, le couvercle étant configuré pour recouvrir au moins en partie l'ouverture de la région intérieure durant le stockage et la cuisson ou le chauffage ;
et en outre dans lequel le produit alimentaire se dilate en cours de cuisson ou de chauffage et dans lequel la dilatation du produit alimentaire entraîne une extension de la paroi latérale dans la direction généralement verticale jusqu'à l'état déployé, ou le produit alimentaire dégage de la vapeur d'eau en cours de cuisson ou de chauffage, en entraînant une extension de la paroi latérale dans la direction généralement verticale jusqu'à l'état déployé.

2. Ensemble emballage selon la revendication 1, dans lequel le produit alimentaire est un produit sous forme de popcorn.

3. Ensemble emballage selon la revendication 1, dans lequel la paroi latérale est transparente.

4. Ensemble emballage selon la revendication 1, dans lequel la partie de base a une rigidité verticale supérieure à celle de la paroi latérale.

5. Ensemble emballage selon la revendication 1, dans lequel la partie de base comprend un suscepteur pour micro-ondes (38).

6. Ensemble emballage selon la revendication 1, dans lequel le contenant est généralement en forme de tronc de cône.

7. Ensemble emballage selon la revendication 1, dans lequel la paroi latérale est comprimée dans l'état aplati par repli d'au moins une partie de la paroi latérale par-dessus au moins une partie de la partie de base de telle sorte que la partie de la paroi latérale entoure la partie de la partie de base.

8. Ensemble emballage selon la revendication 1, dans lequel le couvercle comprend une pluralité de pores (104) qui sont configurés pour évacuer la pression dans le contenant quand la pression dans le contenant dépasse une valeur de seuil.

9. Ensemble emballage selon la revendication 1, dans lequel le couvercle comprend une ouverture centrale formée dans ledit couvercle, une languette de libération (96), et une pluralité de perforations (98) s'étendant de la languette de libération à l'ouverture centrale dans une configuration curviligne, et dans lequel la languette de libération est configurée pour être tirée afin d'ouvrir le couvercle le long de la pluralité de perforations.

10. Ensemble emballage selon la revendication 9, dans lequel le couvercle comprend en outre un film.

11. Ensemble emballage selon la revendication 1, comprenant en outre au moins l'une d'une poignée (152) ou d'une languette (152c) configurée pour faciliter la préhension du contenant.

12. Ensemble emballage selon la revendication 1, dans lequel le contenant comprend un mécanisme de blocage (130) configuré pour maintenir le contenant dans l'état aplati.

13. Ensemble emballage selon la revendication 12, dans lequel le mécanisme de blocage comprend une bande de libération (130).

14. Ensemble emballage selon la revendication 1, dans lequel la paroi latérale comprend des plis en accordéon configurés pour une compression de la paroi latérale dans l'état aplati.
